# EUROPEAN PATENT APPLICATION

(11) **EP 4 015 211 A1**
(43) Date of publication of application: **22.06.2022**
(21) Application number: 20214047.1
(22) Date of filing: 15.12.2020
(51) Int. Cl.: B32B 5/18, B32B 5/32, B32B 7/02, B32B 7/08, B32B 7/12, B32B 25/04, B32B 25/12, B32B 25/16, B32B 27/06, B32B 27/40

(54) **METHOD TO GENERATE PARTICLE MATS FROM REACTIVE PU SYSTEMS**

(71) Applicant: BASF SE, 67056 Ludwigshafen am Rhein (DE)
(72) Inventor: FREIDANK, Daniel, 49448 Lemfoerde (DE); PRISSOK, Frank, 49448 Lemfoerde (DE); CORDES, Claudia Gisela, 49448 Lemfoerde (DE); JAEHNIGEN, Julia Christa, 67056 Ludwigshafen am Rhein (DE); LINDER, Richard Igor, 49448 Lemfoerde (DE); KARAPETYAN, Gnuni, 51067 Köln (DE)
(74) Representative: Altmann Stößel Dick Patentanwälte PartG mbB

(57) **Abstract**

The present invention is directed to a composite element comprising a layer consisting of a network having repeating units which comprise nodes and edges, wherein the composite element has a height H vertical to each element's longitudinal extension, which is in the range of from 1 to 10000 mm, and wherein the layer has a volume, a longitudinal extension and a maximum height h vertical to the longitudinal extension and comprises a polymeric material with cellular structure. The present invention further is directed to a process for producing a composite element according to the present invention, as well as the use of a composite element according to the invention or a composite element obtained or obtainable by a process according to the present invention as a design element, damping element, preferably as damper for seismic vibration control of constructions, preferably buildings or bridges; sound damping element, body protector; mattress or part of a mattress, furniture or flooring element, element of automotive industry, preferably dashboard, bearing, tire, sport article, shoe, preferably a shoe sole, more preferably a part of a shoe sole.

## Description

The present invention is directed to a composite element comprising a layer consisting of a network having repeating units which comprise nodes and edges, wherein the composite element has a height H vertical to each element's longitudinal extension, which is in the range of from 1 to 10000 mm, and wherein the layer has a volume, a longitudinal extension and a maximum height h vertical to the longitudinal extension and comprises a polymeric material with cellular structure. The present invention further is directed to a process for producing a composite element according to the present invention, as well as the use of a composite element according to the invention or a composite element obtained or obtainable by a process according to the present invention as a design element, damping element, preferably as damper for seismic vibration control of constructions, preferably buildings or bridges; sound damping element, body protector; mattress or part of a mattress, furniture or flooring element, element of automotive industry, preferably dashboard, bearing, tire, sport article, shoe, preferably a shoe sole, more preferably a part of a shoe sole.

In many application fields, for example, in the field of sport articles such as footwear, a strong demand exists for high performance materials, which should be superior in their mechanical properties. Especially for footwear materials are required having low densities, resulting in low weight, in combination with high elasticity and further improved mechanical properties. An important aspect is damping, i.e. the ability of a material to reduce impact forces and rebound resiliance. Currently elastomeric foams are used for production of high performance shoe soles. However, the known foam materials generally have an upper limitation in beneficial performance like, for example, energy return since continuous reduction of foam density generally results in unfavorable reduction of energy return. Thus, a continuous enhancement of energy return of low density final articles made from elastic foam materials is an important challenge.

WO 2018/172287 A1 describes the use of a composite element for a shoe sole, wherein the composite element comprises at least two elements, wherein each element has a body, a longitudinal extension and a height h vertical to the longitudinal extension and comprises a polymeric material with a cellular structure, wherein the elements are at least one partial contact parallel to the longitudinal extension and have a closed surface (skin) at least in the contact area. WO 2007/104651 A1 is also directed to multi-layered foamed composite elements.

Processes for preparing materials with a cellular structure having a specific design to optimize the properties for various applications are in principle known from the state of the art. EP 2109637 B1 discloses a hybrid systems consisting of foamed thermoplastic elastomers and polyurethanes. WO 95/01242 A1 is directed to a process for preparing abrasive particles from suspensions with cavities having a specific design, for example inducing the shape of inverted pyramids.

Also the use of foamed particles to prepare composites by joining the particles are known from the state of the art to adjust the properties of the composite elements.

For many applications, the stability and the dampening properties of the composites disclosed in the state of the art are not sufficient. It was therefore an object of the present invention to provide materials having good dimensional stability and, simultaneously, improved damping properties.

According to the present invention this object is solved by a composite element comprising a layer consisting of a network having repeating units which comprise nodes and edges,
wherein the composite element has a height H vertical to each element's longitudinal extension, which is in the range of from 1 to 10000 mm,
wherein the layer has a volume, a longitudinal extension and a maximum height h vertical to the longitudinal extension and comprises a polymeric material with cellular structure.

The term "composite element" as used herein is a broad term and is to be given its ordinary and customary meaning to a person of ordinary skill in the art and is not to be limited to a special or customized meaning. The term specifically may refer, without limitation, to an element comprising two or more sub-elements. In principle, no restrictions exist regarding the number of sub-elements comprised by one composite element, provided that there are at least two elements present. Preferably, the composite element comprises at least two or three elements, more preferably from 3 to 10 elements.

In principle, no restrictions exist regarding the dimensions of the composite element, in particular, no restrictions exist regarding a height H of the composite element vertical to each element's longitudinal extension. Preferably, the composite element has a height H vertical to each element's longitudinal extension, which is in the range of from 1 to 10000 mm, more preferably in the range of from 5 to 1000 mm, more preferably in the range of from 5 to 100 mm.

The composite element comprises at least one layer, more preferable at least two layers. The term "layer" as used herein is a broad term and is to be given its ordinary and customary meaning to a person of ordinary skill in the art and is not to be limited to a special or customized meaning. The term specifically may refer, without limitation, to an individual element of the composite element. The terms "single layer" and "individual layer" are used synonymous in the following. Specifically, the layers may be or may comprise mats. Each layer has a volume, a longitudinal extension and a maximum height h vertical to the longitudinal extension. In principle, also no restrictions exist regarding the dimensions of each layer, provided that the dimensions of the composite element are defined by the dimensions of the individual layers. For example, a sum of the individual dimensions of each layer may be equal to the dimensions of the composite element. However, in case of interlocked or engaged layers, the height of the composite element may be lower than the height of the individual layers. The layers may have equal dimensions or different dimensions. For example, the composite element may have a pyramidal layer structure with increasing longitudinal extensions of the layers from up to down. Preferably, each layer's height h is in the range of from 0.25 to 2500 mm, more preferably in the range of from 0.5 to 250 mm, more preferably in the range of from 0.75 to 250 mm, more preferably in the range of from 1 to 25 mm.

In case the composite element of the present invention comprises two or more layers, the layers are preferably stacked.

According to a further aspect, the present invention is also directed to the composite element as disclosed above, wherein the composite element comprises at least two layers, each consisting of a network having repeating units which comprise nodes and edges, wherein each layer has a volume, a longitudinal extension and a maximum height h vertical to the longitudinal extension and comprises a polymeric material with cellular structure, and wherein the layers are stacked.

Preferably, the layers of the composite element are stacked. Specifically, in a direction vertical to the longitudinal extension the layers may be arranged one above the other. The layers may be at least in partial contact, specifically parallel to the longitudinal extension. In principle, no restrictions exist regarding the adhesion between the individual layers as long as the layers are fixed together. Thus, adhesion between the individual layers may simply be based on mechanical or electrostatic adhesion. Preferably, the layers of the composite element are adhesively bonded in a contact area, prefer-ably by a method selected from the group consisting of stitching, steam-chest molding, gluing and others.

Preferably, the layers may have a closed surface (skin) at least in a contact area. Each layer may have a skin at least in the contact area with its adjacent element, however, each layer's surface may be closed or open in non-contact areas, for example, in case of plate like layers, which are in contact over their larger surfaces, the sides, i.e. the smaller surfaces, where no contact with an adjacent element is given, may display open pores or may equally display a closed surface.

"Closed surface at least in the contact area" means that each layer has a skin at least in the contact area with its adjacent element, however, each layer's surface may be closed or open in non-contact areas, for example, in case of plate like layers, which are in contact over their larger surfaces, the sides, i.e. the smaller surfaces, where no contact with an adjacent element is given, may display open pores or may equally display a closed surface.

The composite element of the present invention may comprise two or more layers which may differ in their dimensions and also in the chemical mature of the cellular material.

The composite element may also comprise further layers, for example layers comprising non cellular materials which may be connected with one or more of the layers of the composite element.

According to a further aspect, the present invention is also directed to the composite element as disclosed above, wherein the composite element further comprises a layer consisting of a non-cellular material and the layer is at least in partial contact parallel to the longitudinal extension with at least one of the layers consisting of a network having repeating units which comprise nodes and edges.

In another preferred embodiment, the polymeric material with cellular structure of at least one layer of the composite element is connected to a non-cellular material of different structure. For example, such a polymeric material may be used as layer for composition of floor covering. Suitable materials include for example elastomers, in particular thermoplastic elastomers. Preferably, the additional layer is a planar structure.

Each layer comprises a network having repeating units which comprise nodes and edges. The term "network" as used herein is a broad term and is to be given its ordinary and customary meaning to a person of ordinary skill in the art and is not to be limited to a special or customized meaning. The term specifically may refer, without limitation, to a system with linked sub-units. In particular, the term network may refer to a structured layer. Each whole individual layer may be regarded as network comprising nodes and edges. Each layer may comprise a plurality of nodes. The nodes of each layer may be arranged within the same plane. Each of the layers may comprise holes or a thin membrane in a plane of the layer between the nodes, wherein the nodes are connected via edges. The network may be or comprise a pattern, in particular a regular pattern, in which the nodes and edges are arranged.

The term "node" as used herein is a broad term and is to be given its ordinary and customary meaning to a person of ordinary skill in the art and is not to be limited to a special or customized meaning. The term specifically may refer, without limitation, to a volume range of the layer having an increased thickness in comparison to regions of holes, membranes or edges. The term node may refer to a particle and/or a vertex. The edges may have a lower thickness compared to the nodes. Holes may have a thickness of zero. Each node may have a shape such as a spherical shape, bipyramidal shape, cuboid shape, or a 3D polygonal shape. The nodes of the at least two layers and/or the nodes of the individual layers may be identical or different. Each node may have a symmetric shape with respect to a plane of the layer. However, non-symmetric designs may be possible, too. For example, nodes and edges may be arranged in different planes of symmetry. Thus, parts of the individual nodes below a plane of symmetry of the edges may be smaller compared to parts of nodes above the plane of symmetry of the edges, or vice versa. Embodiments, wherein parts of the individual nodes below a plane of symmetry of the edges are smaller compared to parts of nodes above the plane of symmetry of the edges, may be advantageous for foaming processes at lower densities. In principle, no restrictions exist regarding the dimensions of the nodes are given. For example, the nodes may have an effective diameter of 0.002 m to 0.1 m. The nodes may have a length, i.e. extension in longitudinal extension of the layer, and a thickness, i.e. extension vertical to the longitudinal extension of the layer.

The term "edge" as used herein is a broad term and is to be given its ordinary and customary meaning to a person of ordinary skill in the art and is not to be limited to a special or customized meaning. The term specifically may refer, without limitation, to at least one element of the network configured for connecting the nodes. The edges may have a length, i.e. extension in longitudinal extension of the layer, and a thickness, i.e. extension vertical to the longitudinal extension of the layer. The edges may have different shapes such as tube like, prismatic, specifically cubic, cylindrical and the like.

The term "repeating unit" as used herein is a broad term and is to be given its ordinary and customary meaning to a person of ordinary skill in the art and is not to be limited to a special or customized meaning. The term specifically may refer, without limitation, to the fact that the network comprises a plurality of units, wherein at least two units of the network are identical. In particular, all units of the network are identical such that the network has a regular structure.

The structure of the network may be defined by the position of the nodes in the network. A relation of numbers of nodes and edges may be from 1:1 to 1:3. Height-proportions of edges and nodes may be from 1:2 to 1:10. Length-proportions of edges and nodes may be arbitrary, preferably from 1:10 to 5:1, more preferably from 1:10 to 3:1. A relation of numbers of nodes and edges may be from 1:1 to 1:3. Size-proportions of nodes and edges may be from 1:1 to 1:10, preferably from 1:2 to 1:5. The edges may have a length, i.e. extension in longitudinal extension of the layer, and a thickness, i.e. extension vertical to the longitudinal extension of the layer.

According to a further aspect, the present invention is also directed to the composite element as disclosed above, wherein the ratio of the number of the nodes and the number of the edges is in the range of from 1:1 to 1:3.

According to a further aspect, the present invention is also directed to the composite element as disclosed above, wherein the ratio of the size of the nodes and the size of the edges is in the range of from 1:1 to 1:10.

By changing the shape and the pattern of the nodes in the layers it may be possible to adapt and/or select properties of the composite element without changing the material in the single layers. This, especially, applies to the effective density, in particular as a result of adapting and/or selecting the packing of the single layers, and the mechanical properties, in particular as a result of changing a contact area between the single layers.

According to the present invention, the network comprises nodes and edges. The area free form nodes and edges may be void according to the present invention, i.e. the network might comprise holes. According to the present invention, it is also possible that the network comprises further components, for example membranes. Thus, according to a further aspect, the present invention is also directed to the composite element as disclosed above, wherein the network further comprises membranes.

Preferably, the nodes and edges are connected according to the present invention and form the network. According to a preferred embodiment, the present invention is also directed to the composite element as disclosed above, wherein the nodes are connected via the edges.

By changing the shape and the pattern of the nodes in the layers it may be possible to adapt and/or select properties of the composite element without changing the material in the single layers. This, especially, applies to the effective density, in particular as a result of adapting and/or selecting the packing of the single layers, and the mechanical properties, in particular as a result of changing a contact area between the single layers.

In principle, no restrictions exist regarding the dimensions of the composite element, in particular, no restrictions exist regarding a height H of the composite element vertical to each element's longitudinal extension. Preferably, the composite element has a height H vertical to each element's longitudinal extension, which is in the range of from 1 to 10000 mm, more preferably in the range of from 5 to 1000 mm, more preferably in the range of from 5 to 100 mm.

For example, a sum of the individual dimensions of each layer may be equal to the dimensions of the composite element. However, in case of interlocked or engaged layers, the height of the composite element may be lower than the height of the individual layers. The layers may have equal dimensions or different dimensions. For example, the composite element may have a pyramidal layer structure with increasing longitudinal extensions of the layers from up to down. Preferably, each layer's height h is in the range of from 0.25 to 2500 mm, more preferably in the range of from 0.5 to 250 mm, more preferably in the range of from 0.75 to 250 mm, more preferably in the range of from 1 to 25 mm.

According to a further aspect, the present invention is also directed to the composite element as disclosed above, wherein the height h of each layer is in the range of from 0.25 to 2500 mm.

According to the present invention, the composite element comprises one layer, preferably at least two layers and more preferable at least three layers. According to a further aspect, the present invention is also directed to the composite element as disclosed above, which comprises at least 3 layers, preferably from 3 to 10 layers.

The layers of the composite element may be interlocked or may be bonded in one or more contact areas of the layer. Bonding may for example comprise adhesive bonding. Suitable methods are in principle known to the person skilled in the art. According to a further aspect, the present invention is also directed to the composite element as disclosed above, wherein the layers are adhesively bonded in the contact area, preferably by a method selected from the group consisting of stitching, steam-chest molding, use of adhesive layers and gluing.

Each layer comprises a material with cellular structure. "Material with cellular structure" means a material having cells (synonymous pores) distributed within its structure. In a preferred embodiment of the composite element according to the present invention, each layer consists of the polymeric material with cellular structure. "Polymeric material with cellular structure" means a polymeric material having cells (synonymous pores) distributed within its structure. Preferably, the polymeric material with cellular structure is a foam made of the polymeric material.

The polymeric material with cellular structure of each layer of the composite element may be independently from each other the same or different. In one preferred embodiment, the polymeric material with cellular structure of each layer is the same. In another preferred embodiment, the polymeric material with cellular structure of at least one layer of the composite element is different to the polymeric material with cellular structure of the other layer(s). In another preferred embodiment, the polymeric material with cellular structure of at least one layer of the composite element is connected to a non-cellular material of different structure. For example, such a polymeric material may be used as layer for composition of floor covering. Hardness of each layer of the composite element may be independently from each other the same or different. Stiffness of each layer of the composite element may be independently from each other the same or different. Density of each layer of the composite element may be independently from each other the same or different. Rebound resilience of each layer of the composite element may be independently from each other the same or different.

The polymeric material with cellular structure is preferably a foam, more preferably a foam according to DIN 7726. In principle, no restrictions exist regarding modes of foam preparation. Preferably, the polymeric material with cellular structure of each layer is prepared by a process selected from the group consisting of reactive foaming, preferably injection molding or casting, and extrusion foaming, wherein the process is carried out continuously or discontinuously. According to a preferred embodiment, a suitable mold is used for shaping the foam. In principle, no restrictions exist regarding the polymeric material, provided that it is capable of forming a cellular structure. A preferred embodiment of the present invention is related to a composite element, wherein the polymeric material with cellular structure of each layer is independently selected from polyurethanes, preferably from polyurethane foams.

For the purposes of the invention, "polyurethane" comprises all of the known polyisocyanate polyaddition products. These comprise adducts of isocyanate and alcohol, and they also comprise modified polyurethanes which can comprise isocyanurate structures, allophanate structures, urea structures, carbodiimide structures, uretonimine structures, and biuret structures, and which can comprise further isocyanate adducts. These polyurethanes of the invention comprise in particular foams based on polyisocyanate polyaddition products, e.g. elastomeric foams, flexible foams, semirigid foams and rigid foams. For the purposes of the invention, the term polyurethanes also include polymer blends comprising polyurethanes and further polymers, and also foams made of said polymer blends. Preferably, the polymeric material with cellular structure of each element is independently selected from the group of elastomeric foams, wherein the polymeric material is preferably selected from the group consisting of ethylenvinylacetate (EVA), poly butadiene, ethylene propylene diene (EPDM) rubber, styrene butadiene rubber (SBR), synthetic rubber, natural rubber, polyurea, and polyurethane.

For the purposes of this invention, elastomeric polyurethane foams are polyurethane foams according to DIN 7726, where these exhibit no residual deformation beyond 2% of their initial thickness 10 minutes after brief deformation amounting to 50% of their thickness to DIN 53 577.

The compressive stress value for flexible polyurethane foams of the invention at 10% compression, or the compressive strength of these foams according to DIN 53 421/DIN EN ISO 604, is 15 kPa or less, preferably from 1 to 14 kPa, and in particular from 4 to 14 kPa. The compressive stress value for semi rigid polyurethane foams of the invention at 10% compression to DIN 53 421/DIN EN ISO 604 is from greater than 15 to less than 80 kPa. The open-cell factor to DIN ISO 4590 of semi rigid polyurethane foams of the invention and of flexible polyurethane foams of the invention is preferably greater than 85%, particularly preferably greater than 90%. Further details concerning flexible polyurethane foams of the invention and semi rigid polyurethane foams of the invention are found in "Kunststoffhandbuch, Band 7, Polyurethane" [Plastics handbook, volume 7, Polyurethanes], Carl Hanser Verlag, 3rd edition, 1993, chapter 5.

The compressive stress value for rigid polyurethane foams of the invention at 10% compression is greater than or equal to 80 kPa, preferably greater than or equal to 120 kPa, particularly preferably greater than or equal to 150 kPa. The closed-cell factor to DIN ISO 4590 for the rigid polyurethane foam is moreover greater than 80%, preferably greater than 90%. Further details concerning rigid polyurethane foams of the invention are found in "Kunststoffhandbuch, Band 7, Polyurethane" [Plastics handbook, volume 7, Polyurethanes], Carl Hanser Verlag, 3rd edition, 1993, chapter 6.

Integral polyurethane foams are polyurethane foams according to DIN 7726 having a marginal zone in which the density is higher than in the core, as a result of the shaping process. The overall density here averaged over the core and the marginal zone is preferably above 100 g/L. For the purposes of the invention, integral polyurethane foams can again be rigid polyurethane foams, semirigid polyurethane foams, flexible polyurethane foams or elastomeric polyurethane foams. Further details concerning the integral polyurethane foams of the invention are found in "Kunststoffhandbuch, Band 7, Polyurethane" [Plastics handbook, volume 7, Polyurethanes], Carl Hanser Verlag, 3rd edition, 1993, chapter 7.

According to a further aspect, the present invention is also directed to the composite element as disclosed above, wherein the polymeric material with cellular structure of each layer is independently selected from the group of elastomeric foams, preferably from the group consisting of ethylene vinyl acetate (EVA), poly butadiene, ethylene propylene diene (EPDM) rubber, styrene butadiene rubber (SBR), synthetic rubber, natural rubber, polyurea, and polyurethane, more preferably from polyurethane foams.

Each layer comprises a material with cellular structure. In a preferred embodiment of the composite element according to the present invention, each layer consists of the polymeric material with cellular structure. Preferably, the polymeric material with cellular structure is a foam made of the polymeric material.

The optimal design of the composite element may depend on a plurality of factors and may differ from application to application. The term "design" as used herein is a broad term and is to be given its ordinary and customary meaning to a person of ordinary skill in the art and is not to be limited to a special or customized meaning. The term specifically may refer, without limitation, to configuration of the composite element such as configuration of the individual layers, in particular shape of single nodes, position of nodes within the single layer; position of edges within the layer and/or with respect to nodes, thickness of nodes, length of edges and thickness of edges or for example the materials used. The term "designing" as used herein is a broad term and is to be given its ordinary and customary meaning to a person of ordinary skill in the art and is not to be limited to a special or customized meaning. The term specifically may refer, without limitation, to a procedure of planning and/or specifying the composite element.

According to a further aspect, the present invention is also directed to a method for producing a composite element, comprising a layer consisting of a network having repeating units which comprise nodes and edges according to any one of claims 1 to 11, comprising the step:
(i) preparing a layer from a polymeric material with cellular structure, preferably in a mold, wherein the layer consists of a network comprising nodes and edges, wherein the composite element has a height H vertical to each element's longitudinal extension, which is in the range of from 1 to 10000 mm and wherein the nodes are connected via the edges, and the layer has a volume, a longitudinal extension and a maximum height h vertical to the longitudinal extension.

According to step (i), a layer is prepares from a polymeric material with cellular structure. Any suitable method known to the person skilled in the art can be used according to the present invention. The polymeric material with cellular structure can for example be prepared by foaming a suitable material, for example foaming in a suitable mold by injection molding. The mold may be a suitable molding known to the person skilled in the art which comprises a suitable structure to obtain a layer with nodes and edges. The mold may for example comprise a regular structure with symmetric or unsymmetric network of indentions. The mold can comprise two or more parts which each have indentions resulting in a mold with nodes an edges. A suitable mold for molding can for example comprise an upper-lower pair of molds, wherein one or both of said molds has a structure in which a tapered male mold with suitable cross-sectional shape and tapered toward the tip end thereof is located.

According to a further aspect, the present invention is also directed to the method for preparing a composite element as disclosed above, wherein the layer is formed in a mold which has connected cavities which form a regular network.

The indentions may have a shape such as a spherical shape, bipyramidal shape, cuboid shape, or a 3D polygonal shape. The shape of the indentions may be identical or different. Parts of the individual indentions may be smaller compared to other parts of the indentions. 15. According to a further aspect, the present invention is also directed to the method for preparing a composite element as disclosed above, wherein the cavities have a shape selected from the group consisting of spherical shape, bipyramidal shape, cuboid shape, and a 3D polygonal shape.

Suitable materials to prepare a polymeric material with cellular structure are in principle known to the person skilled in the art. Reference is made to the disclosure above.

According to a further aspect, the present invention is also directed to the method for preparing a composite element as disclosed above, wherein the layer is prepared by foaming, in particular from a reactive foam. Suitable reactive foams, reactants and foaming agents are known to the person skilled in the art.

Suitable materials with cellular structure are for example polyurethanes, in particular polyurethane foams prepared reacting a polyisocyanate composition, a polyol composition, and a blowing agent composition. Preferably, step (i) comprises
(ii.1) introducing into a mold at least the components
   (a) polyisocyanate composition;
   (b) polyol composition;
   (c) blowing agent composition;
(ii.2) reacting components (a) and (b) by foaming,
resulting in a layer from a polymeric material with cellular structure, wherein the layer consists of a network comprising nodes and edges, wherein the composite element has a height H vertical to each element's longitudinal extension, which is in the range of from 1 to 10000 mm and wherein the nodes are connected via the edges, and the layer has a volume, a longitudinal extension and a maximum height h vertical to the longitudinal extension.

Regarding the components (a), (b) and (c), suitable compositions are known to the person skilled in the art. Also here, preferably, at least one further component (d) selected from the group consisting of chain extenders (d1), crosslinkers (d2) and catalysts (d3) is added. Further, if appropriate, other auxiliaries and additives (e) are added to give a reaction mixture and permitting completion of the reaction. Regarding the components (d), i.e. (d1), (d2) and (d3) and (e), suitable compositions are known to the person skilled in the art.

The amounts reacted of the polyisocyanate composition (a), the polyol compositon (b) and the blowing agent compositon (c) are generally such that the equivalence ratio of NCO groups of the polyisocyanates in (a) to the total number of reactive hydrogen atoms in components (b) and (c), is from 0.75 to 1.5:1, preferably from 0.80 to 1.25:1. If the polymeric material with cellular structure comprises at least some isocyanurate groups, the ratio used of NCO groups of the polyisocyanates in (a) to the total number of reactive hydrogen atoms in component (b) and (c) and, if appropriate, (d) and (e) is usually from 1.5 to 20:1, preferably from 1.5 to 8:1. A ratio of 1:1 here corresponds to an isocyanate index of 100.

There is respectively very little quantitative and qualitative difference between the specific starting materials (a) to (e) used for producing polyurethanes when the polyurethane to be produced of the invention is an elastomeric foam, a flexible foam, a semirigid foam, a rigid foam, or an integral foam. By way of example, the starting materials for producing a flexible foam are described in WO 2006/034800 A1 and EP 1529792 A1, the starting materials for producing a semirigid foam are described in "Kunststoffhandbuch, Band 7, Polyurethane" [Plastics handbook, volume 7, Polyurethanes], Carl Hanser Verlag, 3rd edition, 1993, chapter 5.4, the starting materials for producing a rigid foam are described in WO 2006/042674 A1, and the starting materials for producing an integral foam are described in EP 0364854 A1, US 5,506,275, or EP 0897402 A1.

The process according to the present invention may also comprise further steps. According to step (i), a layer from a polymeric material with cellular structure is obtained. The first layer may be combined with one or more additional layers. The further layers may be from a polymeric material with cellular structure of also from a non-cellular material. Further layers may comprise nodes and edges or may also be planar in the context of the present invention.

The layers may be superimposed in a way that the individual layers are at least partially stacked. The superimposed layers further may be at least partially bonded for example in a defined contact area.

According to a further aspect, the present invention is also directed to the method for preparing a composite element as disclosed above, wherein the process further comprises the steps (ii) and (iii):
(ii) superimposing the first layer with at least one further layer so that the layers are at least partially stacked;
(iii) bonding the layers.

According to a further aspect, the present invention is also directed to the method for preparing a composite element as disclosed above, wherein the further consists of a non-cellular material.

According to a further aspect, the present invention is also directed to the method for preparing a composite element as disclosed above, wherein the further layer consists of a network having repeating units which comprise nodes and edges, has a volume, a longitudinal extension and a maximum height h vertical to the longitudinal extension and comprises a polymeric material with cellular structure.

Suitable additional layers may for example also be adhesive layers. According to a further aspect, the present invention is also directed to the method for pre-paring a composite element as disclosed above, wherein an adhesive layer is placed between one or more of the layers.

Bonding according to step (iii) may be achieved by any suitable method known to the person skilled in the art. In principle, no restrictions exist regarding the adhesion between the individual elements as long as the elements stick together. Thus, adhesion between the individual elements may simply be based on mechanical or electrostatic adhesion. Preferably, the elements of the composite element are adhesively bonded in the contact area, preferably by a method selected from the group consisting of stitching, steam-chest molding, gluing and others.

According to a further aspect, the present invention is also directed to the method for preparing a composite element as disclosed above, wherein thermal bonding and/or an adhesive are used in step (iii).

According to a further aspect, the present invention is also directed to a composite element, obtained or obtainable by the method as disclosed above.

The densities of the composite elements according to the present invention are lower than the densities of in comparative elements made from the same material but consisting of one (block) element. Furthermore, even despite the lower density, the composite elements according to the present invention provide beneficially lower energy loss and improved damping compared to the block elements. This is a surprising finding since it is well known in the art that continuous reduction of foam density normally leads to unfavorable increase of energy loss. Surprisingly, the composite elements according to the present invention offer higher energy return.

The composite element according to the present invention is particularly suitable for applications which require good dampening properties such as a composite element selected from the group consisting of: a damping element, preferably as damper for seismic vibration control of constructions, preferably buildings or bridges; a sound damping element; mattress or part of a mattress, furniture or flooring element, element of automotive industry, preferably dashboard, bearing, tire, shoe, preferably a shoe sole, more preferably a part of a shoe sole; a body protector such as for sports equipment, preferably for knee protection, elbow protection, shoulder protection, protective helmet. According to a further aspect, the present invention is also directed to the use of a composite element as disclosed above or a composite element obtained or obtainable according to a process as disclosed above, as a design element, damping element, preferably as damper for seismic vibration control of constructions, preferably buildings or bridges; sound damping element, body protector; mattress or part of a mattress, furniture or flooring element, element of automotive industry, preferably dashboard, bearing, tire, sport article, shoe, preferably a shoe sole, more preferably a part of a shoe sole.

The present invention also relates to a composite element, obtained or obtainable by the method described above.

The present invention also relates to the use of a composite element as disclosed above or of a composite element obtainable or obtained according to the process as disclosed above as a damping element, preferably as damper for seismic vibration control of constructions, preferably buildings or bridges. The present invention also relates to the use of a composite element as disclosed above or of a composite element obtainable or obtained according to the process as disclosed above as a mattress or part of a mattress. The present invention also relates to the use of a composite element as disclosed above or of a composite element obtainable or obtained according to the process as disclosed above as a furniture element or flouring element. The present invention also relates to the use of a composite element as disclosed above or of a composite element obtainable or obtained according to the process as disclosed above as an element of automotive industry, preferably an element selected from the group of dashboard, bearing and tire. The present invention also relates to the use of a composite element as disclosed above or of a composite element obtainable or obtained according to the process as disclosed above as a shoe, preferably a shoe sole, more preferably a part of a shoe sole.

The present invention is further illustrated by the following set of embodiments and combinations of embodiments resulting from the dependencies and back-references as indicated. In particular, it is noted that in each instance where a range of embodiments is mentioned, for example in the context of a term such as "any one of embodiments (1) to (4)", every embodiment in this range is meant to be explicitly disclosed for the skilled person, i.e. the wording of this term is to be understood by the skilled person as being synonymous to "any one of embodiments (1), (2), (3), and (4)". Further, it is explicitly noted that the following set of embodiments is not the set of claims determining the extent of protection, but represents a suitably structured part of the description directed to general and preferred aspects of the present invention.

An embodiment (1) of the present invention relates to a composite element comprising a layer consisting of a network having repeating units which comprise nodes and edges,
wherein the composite element has a height H vertical to each element's longitudinal extension, which is in the range of from 1 to 10000 mm,
wherein the layer has a volume, a longitudinal extension and a maximum height h vertical to the longitudinal extension and comprises a polymeric material with cellular structure.

A further preferred embodiment (2) concretizing embodiment (1) relates to said composite element, wherein the composite element comprises at least two layers, each consisting of a network having repeating units which comprise nodes and edges, wherein each layer has a volume, a longitudinal extension and a maximum height h vertical to the longitudinal extension and comprises a polymeric material with cellular structure, and
wherein the layers are stacked.

A further preferred embodiment (3) concretizing any one of embodiments (1) or (2) relates to said composite element, wherein the composite element further comprises a layer consisting of a non-cellular material and the layer is at least in partial contact parallel to the longitudinal extension with at least one of the layers consisting of a network having repeating units which comprise nodes and edges.

A further preferred embodiment (4) concretizing any one of embodiments (1) to (3) relates to said composite element, wherein the network further comprises membranes.

A further preferred embodiment (5) concretizing any one of embodiments (1) to (4) relates to said composite element, wherein the nodes are connected via the edges.

A further preferred embodiment (6) concretizing any one of embodiments (1) to (5) relates to said composite element, wherein the ratio of the number of the nodes and the number of the edges is in the range of from 1:1 to 1:3.

A further preferred embodiment (7) concretizing any one of embodiments (1) to (6) relates to said composite element, wherein the ratio of the size of the nodes and the size of the edges is in the range of from 1:1 to 1:10.

A further preferred embodiment (8) concretizing any one of embodiments (1) to (7) relates to said composite element, wherein the height h of each layer is in the range of from 0.25 to 2500 mm.

A further preferred embodiment (9) concretizing any one of embodiments (2) to (8) relates to said composite element, wherein the layers are adhesively bonded in the contact area, preferably by a method selected from the group consisting of stitching, steam-chest molding, use of adhesive layers and gluing.

A further preferred embodiment (10) concretizing any one of embodiments (1) to (9) relates to said composite element, wherein the composite element comprises at least 3 layers, preferably from 3 to 10 layers.

A further preferred embodiment (11) concretizing any one of embodiments (1) to (10) relates to said composite element, wherein the polymeric material with cellular structure of each layer is independently selected from the group of elastomeric foams, preferably from the group consisting of ethylene vinyl acetate (EVA), poly butadiene, ethylene propylene diene (EPDM) rubber, styrene butadiene rubber (SBR), synthetic rubber, natural rubber, polyurea, and polyurethane, more preferably from polyurethane foams.

A further embodiment (12) relates to a process for producing a composite element, comprising a layer consisting of a network having repeating units which comprise nodes and edges according to any one of embodiments (1) to (11), comprising the step:
(i) preparing a layer from a polymeric material with cellular structure, preferably in a mold, wherein the layer consists of a network comprising nodes and edges, wherein the composite element has a height H vertical to each element's longitudinal extension, which is in the range of from 1 to 10000 mm and wherein the nodes are connected via the edges, and the layer has a volume, a longitudinal extension and a maximum height h vertical to the longitudinal extension.

A further preferred embodiment (13) concretizing embodiment (12) relates to said process, wherein the nodes are connected via the edges.

A further preferred embodiment (14) concretizing any one of embodiments (12) or (13) relates to said process, wherein the ratio of the number of the nodes and the number of the edges is in the range of from 1:1 to 1:3.

A further preferred embodiment (15) concretizing any one of embodiments (12) to (14) relates to said process, wherein the ratio of the size of the nodes and the size of the edges is in the range of from 1:1 to 1:10.

A further preferred embodiment (16) concretizing any one of embodiments (12) to (15) relates to said process, wherein the height h of each layer is in the range of from 0.25 to 2500 mm.

A further preferred embodiment (17) concretizing any one of embodiments (12) to (16) relates to said process, wherein the polymeric material with cellular structure of each layer is independently selected from the group of elastomeric foams, preferably from the group consisting of ethylene vinyl acetate (EVA), poly butadiene, ethylene propylene diene (EPDM) rubber, styrene butadiene rubber (SBR), synthetic rubber, natural rubber, polyurea, and polyurethane, more preferably from polyurethane foams.

A further preferred embodiment (18) concretizing any one of embodiments (12) to (17) relates to said process, wherein the layer is prepared by foaming, in particular from a reactive foam.

A further preferred embodiment (19) concretizing any one of embodiments (12) to (18) relates to said process, wherein the layer is formed in a mold which has connected cavities which form a regular network.

A further preferred embodiment (20) concretizing embodiment (19) relates to said process, wherein the cavities have a shape selected from the group consisting of spherical shape, bipyramidal shape, cuboid shape, and a 3D polygonal shape.

A further preferred embodiment (21) concretizing any one of embodiments (12) to (20) relates to said process, wherein the process further comprises the steps (ii) and (iii):
(ii) superimposing the first layer with at least one further layer so that the layers are at least partially stacked;
(iii) bonding the layers.

A further preferred embodiment (22) concretizing embodiment (21) relates to said process, wherein the further layer consists of a non-cellular material.

A further preferred embodiment (23) concretizing embodiment (21) relates to said process, wherein the further layer consists of a network having repeating units which comprise nodes and edges, has a volume, a longitudinal extension and a maximum height h vertical to the longitudinal extension and comprises a polymeric material with cellular structure.

A further preferred embodiment (24) concretizing any one of embodiments (21) to (23) relates to said process, wherein an adhesive layer is placed between one or more of the layers.

A further preferred embodiment (25) concretizing any one of embodiments (21) to (24) relates to said process, wherein thermal bonding and/or an adhesive are used in step (iii).

A further embodiment (26) relates to a composite element, obtained or obtainable by the method of any one of embodiments (12) to (25).

A further embodiment (27) relates to the use of a composite element according to any one of embodiments (1) to (11) or of a composite element according to embodiment (26), as a design element, damping element, preferably as damper for seismic vibration control of constructions, preferably buildings or bridges; sound damping element, body protector; mattress or part of a mattress, furniture or flooring element, element of automotive industry, preferably dashboard, bearing, tire, sport article, shoe, preferably a shoe sole, more preferably a part of a shoe sole.

A further embodiment (28) relates to a process for preparing a design element, damping element, preferably as damper for seismic vibration control of constructions, preferably buildings or bridges; sound damping element, body protector; mattress or part of a mattress, furniture or flooring element, element of automotive industry, preferably dashboard, bearing, tire, sport article, shoe, preferably a shoe sole, more preferably a part of a shoe sole using a composite element according to any one of embodiments (1) to (11) or of a composite element according to embodiment (26).

### Cited literature

WO 2018/172287 A1
WO 2007/104651 A1
EP 2109637 B1
WO 95/01242 A1
"Kunststoffhandbuch, Band 7, Polyurethane" [Plastics handbook, volume 7, Polyurethanes], Carl Hanser Verlag, 3rd edition, 1993, chapter 5
"Kunststoffhandbuch, Band 7, Polyurethane" [Plastics handbook, volume 7, Polyurethanes], Carl Hanser Verlag, 3rd edition, 1993, chapter 6
"Kunststoffhandbuch, Band 7, Polyurethane" [Plastics handbook, volume 7, Polyurethanes], Carl Hanser Verlag, 3rd edition, 1993, chapter 7
"Kunststoffhandbuch, Band 7, Polyurethane" [Plastics handbook, volume 7, Polyurethanes], Carl Hanser Verlag, 3rd edition, 1993, chapter 5.4
WO 2006/042674 A1
EP 0364854 A1
US 5,506,275
EP 0897402 A1

## Claims

1. A composite element comprising a layer consisting of a network having repeating units which comprise nodes and edges,
wherein the composite element has a height H vertical to each element's longitudinal extension, which is in the range of from 1 to 10000 mm,
wherein the layer has a volume, a longitudinal extension and a maximum height h vertical to the longitudinal extension and comprises a polymeric material with cellular structure.

2. The composite element according to claim 1, wherein the composite element comprises at least two layers, each consisting of a network having repeating units which comprise nodes and edges, wherein each layer has a volume, a longitudinal extension and a maximum height h vertical to the longitudinal extension and comprises a polymeric material with cellular structure, and
wherein the layers are stacked.

3. The composite element according to claim 1 or 2, wherein the composite element further comprises a layer consisting of a non-cellular material and the layer is at least in partial contact parallel to the longitudinal extension with at least one of the layers consisting of a network having repeating units which comprise nodes and edges.

4. The composite element according to any one of claims 1 to 3, wherein the network further comprises membranes.

5. The composite element according to any one of claims 1 to 4, wherein the nodes are connected via the edges.

6. The composite element according to any one of claims 1 to 5, wherein the ratio of the number of the nodes and the number of the edges is in the range of from 1:1 to 1:3.

7. The composite element according to any one of claims 1 to 6, wherein the ratio of the size of the nodes and the size of the edges is in the range of from 1:1 to 1:10.

8. The composite element according to any one of claims 1 to 7, wherein the height h of each layer is in the range of from 0.25 to 2500 mm.

9. The composite element according to any one of claims 2 to 8, wherein the layers are adhesively bonded in the contact area, preferably by a method selected from the group consisting of stitching, steam-chest molding, use of adhesive layers and gluing.

10. The composite element according to any one of claims 1 to 9, which comprises at least 3 layers, preferably from 3 to 10 layers.

11. The composite element according to any one of claims 1 to 10, wherein the polymeric material with cellular structure of each layer is independently selected from the group of elastomeric foams, preferably from the group consisting of ethylene vinyl acetate (EVA), poly butadiene, ethylene propylene diene (EPDM) rubber, styrene butadiene rubber (SBR), synthetic rubber, natural rubber, polyurea, and polyurethane, more preferably from polyurethane foams.

12. A process for producing a composite element, comprising a layer consisting of a network having repeating units which comprise nodes and edges according to any one of claims 1 to 11, comprising the step:
(i) preparing a layer from a polymeric material with cellular structure, preferably in a mold, wherein the layer consists of a network comprising nodes and edges, wherein the composite element has a height H vertical to each element's longitudinal extension, which is in the range of from 1 to 10000 mm and wherein the nodes are connected via the edges, and the layer has a volume, a longitudinal extension and a maximum height h vertical to the longitudinal extension.

13. The process according to claim 12, wherein the layer is prepared by foaming, in particular from a reactive foam.

14. The process according to claim 12 or 13, wherein the layer is formed in a mold which has connected cavities which form a regular network.

15. The process according to claim 14, wherein the cavities have a shape selected from the group consisting of spherical shape, bipyramidal shape, cuboid shape, and a 3D polygonal shape.

16. The process according to any one of claims 12 to 15, wherein the process further comprises the steps (ii) and (iii):
(ii) superimposing the first layer with at least one further layer so that the layers are at least partially stacked;
(iii) bonding the layers.

17. The process according to claim 16, wherein the further consists of a non-cellular material.

18. The process according to claim 16, wherein the further layer consists of a network having repeating units which comprise nodes and edges, has a volume, a longitudinal extension and a maximum height h vertical to the longitudinal extension and comprises a polymeric material with cellular structure.

19. The process according to any one of claims 16 to 18, wherein an adhesive layer is placed between one or more of the layers.

20. The process according to any one of claims 16 to 19, wherein thermal bonding and/or an adhesive are used in step (iii).

21. A composite element, obtained or obtainable by the method of any one of claims 12 to 20.

22. Use of a composite element according to any one of claims 1 to 11 or of a composite element according to claim 21, as a design element, damping element, preferably as damper for seismic vibration control of constructions, preferably buildings or bridges; sound damping element, body protector; mattress or part of a mattress, furniture or flooring element, element of automotive industry, preferably dashboard, bearing, tire, sport article, shoe, preferably a shoe sole, more preferably a part of a shoe sole.
